# EUROPEAN PATENT APPLICATION

(11) **EP 0 800 871 A1**
(43) Date of publication of application: **15.10.1997**
(21) Application number: 95941906.0
(22) Date of filing: 26.12.1995
(51) Int. Cl.: B09B 3/00, A62D 3/00

(54) **WASTE DISPOSAL MATERIAL AND METHOD**

(30) Priority: 28.12.1994 JP 326790/94; 08.12.1995 JP 319894/95
(71) Applicant: KANEGAFUCHI KAGAKU KOGYO KABUSHIKI KAISHA, Kita-ku Osaka-shi Osaka-fu 530 (JP)
(72) Inventor: HARA, Kazuhiro, Kanegafuchi Kagaku Kogyo KK, Settsu-shi, Osaka 566 (JP); UESHIMA, Kenji, Kanegafuchi Kagaku Kogyo KK, Settsu-shi, Osaka 566 (JP); HUNAHASHI, Takashi, Kanegafuchi Kagaku KK, Settsu-shi, Osaka 566 (JP); UEKITA, Masakazu, Kanegafuchi Kagaku Kogyo KK, Settsu-shi, Osaka 566 (JP)
(74) Representative: Crump, Julian Richard John
(86) International application number: JP9502706
(87) International publication number: WO9620049

(57) **Abstract**

Waste disposal material and method for stabilizing wastes containing toxic heavy metals such as lead, cadmium, mercury, chromium and nickel in order to prevent these metals from exuding from the wastes, especially alkaline fly ash discharged from waste incinerators, not only in the course of disposal from waste incinerators, not only in the course of disposal thereof but also after being left to stand for long. The disposal material comprises polyvalent-metal salts of phosphoric acid and contains, as required, cement, porous silicon dioxide, aluminum silicate and iron powder. The disposal method comprises mixing the disposal material with the waster, optionally adding waste to the mixture followed by kneading, and aging and solidifying the mixture, thus stabilizing efficiently the toxic heavy metals contained in industrial wastes or in dusts such as EP ash or bag ash discharged from municipal waste incinerators, especially EP or bag ash containing slaked or quick lime flown thereinto, to thereby reduce the amount of the exudates. The disposal material can be applied also to the disposal of slag discharged from mines, stabilization of heavy metals contained in the soil contaminated therewith, and disposal of the sludge containing heavy metals resulting from waste water treatment.

## Description

### Technical Field

This invention relates to a waste disposal agent and a method of waste disposal capable of effectively stabilizing hazardous metals being contained in wastes.

### Background Art

In Japan, about 48,000 thousand tons of a general waste(1988) and about 310 million tons of an industrial waste(1985) were discharged. It is estimated that amounts of a general waste and an industrial waste will reach 80,000 thousand tons and 600 million tons respectively in 2000. 70% of a general waste is disposed by incineration and 20% of it is disposed directly. While, about 40%of an industrial waste is reused , about 30%of it is disposed after its volume is reduced by incineration and etc., and about 30% of it is disposed directly at the final disposal places. Since incinerated general wastes and industrial wastes contain a large amount of hazardous metals, a regulation for disposal of these waste is intended to become more severe. In Japan, these incinerated wastes have become specially controlled general wastes since April, 1995 , and a sufficient prevention of a leaching of heavy metals has been required .

In the case of municipal disposal places, color printed papers and cellophane included in wastes contain cadmium(Cd), lead(Pb), chrome(Cr), mercury(Hg) and copper(Cu), while plastics contain cadmium(Cd), lead(Pb), zinc (Zn), chrome(Cr), mercury(Hg). By incineration of these wastes, an ash, in which these heavy metals are concentrated, is produced.

In incineration firms, the cases are increased, where the main ashes composed of cinders and the fly ashes collected by a bag filter and etc. are recovered separately. Both main ash and fly ash contain heavy metals, but heavy metals in fly ash are easily leached. The reason for this is the following . In incineration firms, powders of calcium hydroxide or calcium oxide are blew in on the way of a waste vent in order to capture a hydrogen chloride gas which is generated in times of an incineration. Since calcium hydroxide or calcium oxide become a calcium chloride by reacting with a hydrogen chloride, a concentration of a hydrogen chloride in a waste gas can be reduced. While, since unreacted calcium hydroxide or calcium oxide remains in a fly ash, the fly ash becomes highly alkaline, the pH of which is above 12. Since a fly ash contains a highly concentrated lead, which tends to become a salt of plumbite and to be soluble in water under a high alkaline atmosphere, lead is leaching out from a fly ash when it is disposed without any treatments.

In an incineration firms, thus, a fly ash is disposed after being mixed with a cement, being kneading with water and being solidified by cure. However, since a cement is alkaline, a leaching of lead can not be prevented sufficiently when a large amount of a cement is added to a fly ash , which is highly alkaline. Therefore, as a regulation for disposal of these waste is intended to become more severe, wastes become to increase to which an usual disposal method of solidifying with a cement can not be applied

Though organic chelate agents are, also, tested in treatment of a fly ash, its stability in a long term has not be proved yet, and many problems such as an odd smelling in their uses have been pointed out.

As mentioned above, it has been seen that there are a various problems in usual methods for stabilizing heavy metals in wastes where cements or chelate agents are used , and inorganic treatment agents different from cements or organic treatment agents such as chelate agents are required.

Recently, further, not only the tightened regulation for leaching of heavy metal must be satisfied at a time of treatment, but also a long term stability tends to be required. This is because effects of heavy metals to human and atmosphere have been clear. For examples, lead has a destructive effect for lever as cadmium, mercury and chromium do. And, also, it is known that lead has a preventing effect for a hem synthesis in blood components and has an effect on nervous systems as mercury do. It has been pointed out that cadmium makes blood pressure high or make an ability of a spermatozoid lower. Poisonous natures of nickel, copper and other metals are ,also, investigated. Therefore, there are possibilities that heavy metals leaching out from wastes pollute underground waters and injure human, if these hazardous heavy metals are disposed without stabilizing treatment at waste disposal firms or if waste treatment agents in treated waste are deteriorated after long storage even if stabilizing treatments are effective at first. Thus, it becomes important to prevent leaching of hazardous substances from these wastes as far as possible extending over long terms. As one of evaluating methods for a long term stability, an availability testing method is known. An availability testing method is adopted in Netherlands as a method for estimating of a stability of treated wastes after leaving them for long terms such as 100 years ∼1000 years. This method is thought more sever compared with TCLP in America or testing methods used in European countries as seen from 603-606 page(1992) in papers of the third conference held by the Japan society of waste management expert and Comparison of different regulatory leaching test procedures for waste materials and construction material, 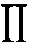 .A. Van der Sloot, D.Hoede, P. Bonouvrie (ECN-C-91-082, Netherlands Energy Research Foundation ECN,(1991).

The procedure of this availability testing method is described in NEN7341(1992). In this testing method, the treated waste is passed through the sieves with 125 µm opening after drying the treated waste. 500ml water is added to 10 g of this treated waste, this mixture is agitated with a stirrer, its PH is recorded every 5∼30 minutes, and its PH is adjusted to 7 by adding 1N nitric acid. After elapse of 3 hours, solid and liquid are separated with use of 0.45 µm micro- filter. After collecting all solids, 500ml water is added again to this collected solids. During agitating this mixture, its PH is recorded every 5∼30 minutes, and its PH is adjusted to 4 by adding 1N nitric acid. After elapse of 3 hours, solid and liquid are separated with use of 0.45 µm micro- filter. The filtrates obtained in both filtration are mixed, and 250ml of this mixture is added with 5N nitric acid to make its PH below 2 , which is submitted to an atomic absorption spectroscopy. Afterwards, the quantity available for leaching (hereinafter referred to as "availability") is estimated with using a various measured data, and a relative availability is obtained through dividing the "availability" by amounts of heavy metals contained in the treated waste. This relative availability becomes a index for giving a maximum leaching % of leachable heavy metals in the treated wastes. As seen from above description, the characters of this testing are in points of use of a large ratio of liquid to solid, use of a small particles of the treated wastes and setting PH low. These point are the reason why this testing method is severe, and the long term stability of the treated wastes can be estimated by using this testing method. While, in Notification No.13 of the Environment Agency, the treated wastes are crushed and passed through sieves with a prescribed opening. Then, ten time water of this treated wastes are added to it and this mixture is agitated for 6 hours. The concentration of heavy metals in filtrate is measured. In the case of wastes for landfill, PH of the water used in the test is adjusted to 5.8∼6.3 beforehand by adding hydrogen chloride. While, in the case of wastes for coast-landfill, PH of the water used in the test is adjusted to 7.8∼8.3 beforehand by adding sodium hydroxide. However, in Notification No. 13 of the Environment Agency, the PH of the extracted liquid does never be adjusted to keep PH constant by adding an acid or alkali during agitation , which is a point different from the availability testing method. Therefore, there are cases where the PH of the extracted liquid is over 12 when a fly ash of highly alkaline nature is treated.

As described in 747-749 page(1995) in paper of the 6-th conference held by the Japan society of waste management expert, the availability testing method is mainly appropriate for estimating a amount of the maximum possible leaching, but a possibility that an amount of leaching of heavy metal by Notification No.13 of the Environment Agency is higher than that of the availability testing method is suggested . Thus, there is a possibility that the availability testing method can not seize an amount of leaching at alkaline side. Therefore it is desirable that a treatment agent is not only effective in the availability testing method but also can make concentration of heavy metals below the regulated value in Notification No. 13 of the Environment Agency. It has been described that a cement is usually used for stabilizing heavy metals in wastes . After all, the preferable treatment agents can be described as such a treatment agent as not only it can make a relative possible leaching amount lesser than a cement does in the availability testing method but also it can make a concentration of leaching hazardous substances smaller than a cement can in Notification No. 13 of the Environment Agency.

As mentioned before, there are some problems in the disposal methods by cements and chelate agents. Therefore, a disposal agent and a disposal method are wanted which can satisfy not only the tightened regulation for leaching of heavy metals but also make it possible to stabilize strongly hazardous heavy metals in the wastes for long terms not to leach out again. Thus, an aim of this invention is to provide a waste disposal agent which is effective in stabilizing the wastes containing hazardous heavy metals. As mentioned above , this invention , especially, aims to provide a disposal agent and a disposal method which make it possible to stabilize strongly hazardous heavy metals containing in the alkaline fly ash discharged from an incineration furnace for long terms not to leach out again.

### Disclosure of the Invention

After hard studies for solving above mentioned problems in the present art for waste treatment, inventors of this invention have gotten a waste disposal agent and a disposal method which can attain this aim. Thus, the waste disposal agent by this invention has components from a multivalent metal salts of phosphoric acid. As a multivalent metal salts of phosphoric acid, such many substances are known as magnesium phosphate, aluminum phosphate, calcium phosphate, iron phosphate, zinc phosphate, silver phosphate and etc.. But, in this invention, magnesium phosphate, aluminum phosphate, calcium phosphate and iron phosphate are preferable from points of view of an industrial availability.

The preferable compounds in magnesium phosphate salts can be listed as such magnesium secondary phosphate and magnesium tertiary phosphate. Among these compounds, magnesium tertiary phosphate has a good ability for both the availability test and Notification No. 13 of the Environment Agency in stabilizing of heavy metals in a high alkaline waste such as a fly ash. This fact shows that this compound is preferable in the meaning that it is possible to stabilize heavy metals in the either cases that an extract is acid or alkaline. There is magnesium primary phosphate among magnesium phosphate salts, but since it is deliquesced during storage and becomes a cause of solidification of a treatment agent, it is not preferable because there is a possibility that a problem may happen when a large amount of powder of a disposal material must be used.

The preferable compounds in aluminum phosphate salts is aluminum secondary phosphate. This compound makes it possible to stabilize heavy metals in the either cases that an extract is acid or alkaline. While, aluminum primary phosphate is not preferable as a disposal material, since it is highly hygroscopic and makes a disposal material deteriorate. Further, aluminum tertiary phosphate is not preferable, since its stabilizing ability for heavy metals is a bit inferior to that of aluminum secondary phosphate, magnesium secondary phosphate, magnesium tertiary phosphate and the other phosphate salts, though its stabilizing ability for heavy metals prefers to that of cement judging from the results of the availability test. Therefore, among aluminum phosphate salts used as a disposal agent in this invention, aluminum secondary phosphate is preferable.

The preferable compounds in calcium phosphate salts can be listed as such calcium primary phosphate, calcium secondary phosphate and calcium tertiary phosphate. Also, the mixture containing calcium primary phosphate can be used, the example of which are triple superphosphate and superphosphate, which is composed mainly from calcium secondary phosphate hydrate and plaster stone, a bit of free phosphoric acid and calcium primary phosphate. If calcium phosphate salt is powdery, they can be used as a disposal agent in this invention.

Iron phosphate salts can be used in this invention, if they are industrially available as powder. In addition, magnesium phosphate salts, aluminum phosphate salts , calcium phosphate salts and iron phosphate salts can contain inevitable impurities.

As mentioned above, preferable examples of multivalent metal phosphate salts( hereafter, called as phosphate salts) are magnesium secondary phosphate, magnesium tertiary phosphate, aluminum secondary phosphate, calcium primary phosphate, calcium secondary phosphate, calcium tertiary phosphate and iron phosphate. The solubility of these phosphate salts to water is low and they are a sparingly soluble substances. Here, the fact that a phosphate salt is soluble means that a solubility of its salt into water is above 5 weight % at 25∼30°C and to be sparingly soluble means that a solubility is less than 5 weight % . For examples, the solubility of magnesium primary phosphate( non-hydrate), magnesium secondary phosphate( tri-hydrate) and magnesium, tertiary phosphate(tetra-hydrate) are 20 weight %, 0.025weight % and 0.02 weight %,respectively. Therefore, magnesium primary phosphate (non-hydrate) is soluble, while magnesium secondary phosphate( tri-hydrate) and magnesium tertiary phosphate(tetra-hydrate) are sparingly soluble.

Among phosphate salts mentioned above, magnesium tertiary phosphate, aluminum secondary phosphate, calcium primary phosphate, calcium secondary phosphate, calcium tertiary phosphate and iron phosphate are especially preferable. Because magnesium tertiary phosphate, aluminum secondary phosphate and iron phosphate are not only recognized to have a stabilizing ability for heavy metals in the availability test but also are superior in stabilizing of heavy metals in Notification No.13 of the Environment Agency. Further, calcium phosphate is preferable in points of its cheap price and an availability of a large amount.

Next, we will explain the mixing ratio of phosphate salts in disposal materials. This ratio is adjusted properly, but a general mixing ratio in waste disposal material is between 10 weight %∼ 100 weight %. Therefore, phosphate salts themselves can be used as a disposal agent. Here, weight % means the weight of powdery phosphate salt. Since phosphate salts exist generally as hydrates and above 30% of their total weight is water, it is better to consider that " weight" means a weight of solid excluding the weight of water in order to show an ability of them exactly. However, when a disposal material is produced practically, it is troublesome to prepare a disposal material after measuring a water content in a powder. Therefore, the weight of powder including water is taken as the weight of phosphate salts.

When a amount of phosphate salts is less than the range mentioned before, a stability of hazardous heavy metals becomes insufficient, and an amount of leaching decreases as a amount of phosphate salts increases. But, since a price of phosphate salts is high compared with that of cement, it is preferable to decide an amount of additions as the most probable properties and price are resulted.

Further, in addition to phosphate salts mentioned above, cement, silica and aluminum silicate can be added to disposal materials by this invention.

When a disposal material by this invention contains a cement, a strength of a treated waste after solidification becomes large and it becomes reusable by molding. Further, PH of waste can be adjusted by utilizing an alkaline nature of a cement. However, since a cement deteriorates in an acid side, there is a defect that heavy metals become easy to leach out due to lowing of a stabilizing ability to heavy metals in the availability test.

Silica and aluminum silicate are effective in treatment of an alkaline smuts and are especially effective for preventing for lead to leach out. However, its stabilizing ability to heavy metals becomes lower in acid side though not so severely as a cement does. Further since a strength of a treated waste after solidification is low in this case, it happens sometimes that a increase in a strength of a treated waste after solidification is needed by a combination with a cement.

For solving the problems, especially a problem of lowing a stabilizing ability to heavy metals in acid side, which happen in an addition of a cement, silica and aluminum silicate to a treatment agent , magnesium secondary phosphate, magnesium tertiary phosphate, aluminum secondary phosphate, calcium primary phosphate, calcium secondary phosphate, calcium tertiary phosphate and iron phosphate are effective ,and a stabilizing ability to heavy metals under the acid condition is increased by an addition of these phosphate salts.

As a cement usable in this invention, there are either a hydraulic cement such as portland cements families ( normal, super speed and strong, mediate heat, sulfate-resistant and etc.), mixing cements families (fly ash, a blast furnace, silica and etc.) and aluminum cements or air-setting cements such as lime and gypsum. In this invention, an individual or mixture of these can be used. And there is no special limit on a kind of a cement and a properly chosen cement can be used depending on the natures of waste and circumstances of treatment .

Next, a mixing ratio of phosphate salts and cements will be explained. Phosphate salts are especially effective in an extracting test under a condition of an acid side such as the availability test , since its stabilizing ability to heavy metals increases by a combination with a cement. The preferable mixing ratio is 10 weight parts ∼ 400 weight parts of at least one compound selected from either magnesium secondary phosphate, magnesium tertiary phosphate, aluminum secondary phosphate, calcium primary phosphate, calcium secondary phosphate, calcium tertiary phosphate or iron phosphate to 100 weight parts of cements.

Among phosphate salts, magnesium tertiary phosphate, aluminum secondary phosphate and iron phosphate make it possible to reduce an amount of more costly phosphate salts compared with cements, since their stabilizing abilities to heavy metals are high even in Notification No.13 of the Environment Agency where an extracting liquid becomes alkaline. A preferable amount of an addition of these phosphate salts is between 10 weight parts ∼40 weight parts to 100 weight parts of cements.

Further, calcium phosphate salts is cheap and available and is effective for such wastes as is easily treated in a comparatively low alkaline states but as is required to be acid resistant. The preferable amount of an addition of at least one compound selected from either calcium primary phosphate, calcium secondary phosphate or calcium tertiary phosphate is between 10 weight parts ∼40 weight parts to 100 weight parts of cements.

As silica and aluminum silicate used in this invention, these, BET specific surface area of which is above 150 m2/g and less than 1000m2/g , are preferable ,and a combination of a porous silica and a porous aluminum silicate ,also, can be used. These porous silica and porous aluminum silicate themselves have a stabilizing ability to heavy metals, but an addition of phosphate salts to these make a stabilizing ability high and make an amount of disposal materials used in waste treatment reduce. Silica or aluminum silicate is known to exist in a form of crystal or amorphous. In this invention , both forms can be used , if they are powdery. As a specific surface area of porous silicate increases, an adsorbing ability of heavy metal such as lead increases, and an adsorbing ability of an alkali becomes also high. As a specific surface area of silica becomes large, heavy metals are stabilized and are difficult to leach out. While, since a bulk density of disposal material becomes low, a treatment agent becomes bulky. Therefore, problems are generated such as the volume of the traffic of disposal materials is reduced, a silo of a large volume is needed for storage and only a small amount of disposal material can be mixed with waste when the same feeder as used in mixing with a cement is used . Thus, the preferable specific surface area ( measured by BET method ) of the porous silica used in this invention is between above 150m²/g and less than 1000m²/g, more preferably between 200m²/g and less than 700m²/g. The examples of such silica are Carplex BS 304, Carplex BS 304F, Carplex #67, Carplex #80 ( all of them are produced by SHIONOGI Pharmaceutical Ltd. Co..). Further, a porous silica can be used, which is produced by heating treatment of acidic clay with sulfuric acid and by washing it sufficiently. But a porous silica usable in this invention can not be limited by these examples.

Aluminum silicate is a substances where some silicone atoms in silica are substituted by aluminum atoms. The well known examples of aluminum silicate are an artificial one and a natural one such as a floatstone, fly ash, kaolin, bentonite, active clay, diatomaceous earth and zeolite. Among these, since an artificial aluminum silicate has not only a large specific area and a high adsorbing ability of lead but also has a high adsorbing ability of alkali, it can stabilize effectively heavy metals such as lead by using it with phosphate salts. As the specific area of aluminum silicate increases, the ability of adsorbing heavy metals such as lead and alkali increases. Thus, the preferable specific area ( measured by BET method ) of aluminum silicate is between above 150m²/g and less than 1000m²/g , more preferably between above 200m²/g and 700m²/g. The examples of such aluminum silicate are KYOWARD 700 PEL and KYOWARD 700 PL( both produced by KYOWA Chem. Ltd. Co.). Further, a clay of montmorillonite such as acidic clay, active clay and bentonite can be usable if their specific area is large. But aluminum silicates usable in this invention can not be limited by these examples.

Next, the mixing ratio of silica or aluminum silicate to phosphate salts will be explained. Silica or aluminum silicate has a stabilizing ability to heavy metals as phosphate salts do. Therefore, a combination of these two compounds is effective, but an addition of a large amount of phosphate salts is not preferable. Because the total solid summation of silica or aluminum silicate and phosphate salts, which is effective for stabilizing, decreases as the amount of phosphate salts increases, since most phosphate salts exist in the form of hydrate as mentioned before. From these reasons, the preferable mixing ratio of silica or aluminum silicate to phosphate salts is between 10 ∼100 weight parts of at least one kind selected from either magnesium secondary phosphate, magnesium tertiary phosphate, aluminum secondary phosphate, calcium primary phosphate, calcium secondary phosphate, calcium tertiary phosphate or iron phosphate to 100 weight parts of silica or aluminum silicate. Since a stabilizing ability of magnesium tertiary phosphate, aluminum secondary phosphate and iron phosphate are especially high even under the condition of an alkaline atmosphere, they make it possible to reduce an amount of costly phosphate salts. The preferable amount of an addition of these phosphate salts is between 10 ∼ 20 weight parts to 100 weight parts of silica or aluminum silicate. Further, though calcium phosphate is cheap and available, it is effective for such waste as is treated easily under the condition of comparatively low alkaline atmosphere but as is required to be acid -resistant.

Further, such a combination also is usable as a combination of silica or aluminum silicate, cement and a kind of compound selected from either magnesium secondary phosphate, magnesium tertiary phosphate, calcium primary phosphate, calcium secondary phosphate, calcium tertiary phosphate or iron phosphate. This combination makes it possible to increase a stabilizing ability under the wide atmosphere from acidic condition to alkaline condition by utilizing facts that silica or aluminum silicate has an excellent stabilizing ability to heavy metals under the alkaline condition and its stabilizing ability under the acidic condition increases by adding phosphate salts and by complementary use of a stabilizing ability of cement. Therefore, a most proper combination of a cement is determined depending on alkaline nature of waste to be treated and a content of heavy metals, and a use of a large amount of cement is also possible. The preferable mixing ratio of silica or aluminum silicate, phosphate salts and cement is 10 ∼ 100 weight parts of a kind of compound selected from either magnesium secondary phosphate, magnesium tertiary phosphate, aluminum secondary phosphate, calcium primary phosphate, calcium secondary phosphate, calcium tertiary phosphate or iron phosphate and 30∼800 weight parts of cement to 100 weight parts of silica or aluminum silicate. Since a stabilizing ability of magnesium tertiary phosphate, aluminum secondary phosphate and iron phosphate are especially high even under the condition of an alkaline atmosphere, they make it possible to reduce an amount of costly phosphate salts. The preferable mixing ratio of silica or aluminum silicate, phosphate salts and cement is 10 ∼50 weight parts of a kind of compound selected from either magnesium tertiary phosphate, aluminum secondary phosphate or iron phosphate and 30∼350 weight parts of cement to 100 weight parts of silica or aluminum silicate. Further, though calcium phosphate is cheap and available, it is effective for such waste as is treated easily under the condition of comparatively low alkaline atmosphere but as is required to be acid -resistant. When the calcium phosphate is chosen, the preferable mixing ratio of silica or aluminum silicate, phosphate salts and cement is 10 ∼50 weight parts of a kind of calcium phosphate selected from either calcium primary phosphate, calcium secondary phosphate or calcium tertiary phosphate and 30∼350 weight parts of cement to 100 weight parts of silica or aluminum silicate.

Further, a combination of phosphate salts and iron powder increases a stabilizing ability to hazardous metals such as copper, mercury and chrome. Because these hazardous metals are reduced by an iron powder and a stabilizing ability of silica or phosphate salts is accelerated complementary. However, an iron powder is rusted by water in phosphate salts and a disposal material is discolored and ,in some cases, there is a possibility that a disposal material is solidified. Therefor, it is preferable to add silica or aluminum silicate in order to deactivate iron in storage of a disposal material, when an iron powder is added to a disposal material. The replace of a parts of cement to iron powder is preferable from point of a storage of a disposal material, since a disposal material becomes alkaline and iron becomes surely inactive due to a formation of an oxide layer on the iron surface. When an iron powder is added, the mixing ratio of silica or aluminum silicate, phosphate salts, cement and iron powder is 10 ∼100 weight parts of at least a kind of compound selected from either magnesium secondary phosphate, magnesium tertiary phosphate, aluminum secondary phosphate, calcium primary phosphate, calcium secondary phosphate, calcium tertiary phosphate or iron phosphate , 10∼ 700 weight parts of cement and 10 ∼100 weight parts of iron powder to 100 weight parts of silica or aluminum silicate. Since magnesium tertiary phosphate, aluminum secondary phosphate and iron phosphate have a high stabilizing ability to heavy metals, the preferable mixing ratio of silica or aluminum silicate, phosphate salts, cement and iron powder is 10 ∼25 weight parts of at least a kind of compound selected from either magnesium tertiary phosphate, aluminum secondary phosphate or iron phosphate , 30∼100 weight parts of cement and 10 ∼25 weight parts of iron powder to 100 weight parts of silica or aluminum silicate. Further, though calcium phosphate is cheap and available, it is effective for such waste as is treated easily under the condition of comparatively low alkaline atmosphere but as is required to be acid -resistant. Therefore, a disposal material which contains 10 ∼ 25 weight of a kind of phosphate salts selected from either calcium primary phosphate, calcium secondary phosphate or calcium tertiary phosphate is also preferable. A disposal material by this invention includes a disposal material which is added by the other components than phosphate salts such as cement , silica, aluminum silicate , iron powder and etc. . Further, a disposal material by this invention includes the other compounds than these compounds such as a reducing agent such as sodium thiosulfate, thiourea, iron chloride( 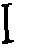 ) and iron sulfate ( 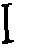 ) and an auxiliary agent such as allophane and bentonite. Further, it is possible to add a water-resistant agent ( calcium chloride, polymer emulsion, water soluble polymer, higher fatty acid and etc.), which is a kind of a mulling agent of cement or concrete, and an accelerating agent which accelerate a coagulation or setting.

Next , a method of producing a waste disposal material by this invention will be explained . As mentioned above, a disposal material by this invention can be an individual of phosphate salts or can be a mixture of phosphate salts, silica, aluminum silicate, cement and iron powder. It is possible to mix altogether the before mentioned phosphate salts, the other components of a disposal material and wastes when a waste is disposed. When the other components are mixed , there are no special limits in order or way of mixing . However, in the cases of a storage of a disposal material, it is better to prevent as possible as we can, the permeation of water as the same level as a cement can be stored.

When the disposal material by this invention is mixed with a waste containing at least a kind of hazardous substance selected from either lead , cadmium, mercury, chrome, copper or nickel, or when a waste and a disposal material can not mixed sufficiently due to flying of dust in the procedure of mixing and kneading with a disposal material in the cases where a waste is powdery or even sludgy, it is better that these are mixed , kneaded , cured and solidified after water is added , if needed. The preferable wastes this invention can be applied are especially incinerated ash, slag, soil and sludge. There are a main ash and a fly ash in an incinerated ash. The examples of fly ash are a powdery dust which is generated from an incineration of a municipal or an industrial waste, a collected dust from fusion furnace, EP ash collected by electric dust chamber and bag ash collected by bag filters. The objects of this invention are fly ashes thus obtained, especially fly ashes of a high alkaline nature. While, a main ash is an ash discharged from a bottom of an incineration furnace at incineration firms of municipal or industrial wastes, and ashes which contain hazardous metals become an object of this invention. Further , disposal materials and the disposal method by this invention can be applied in the disposal of slag discharged from mines, in a stabilization of heavy metals in soil polluted by heavy metals and in disposal of sludge containing heavy metals which is generated in waste water disposal.

The preferable way of performing this invention is a way of extruding the sufficiently kneaded mixture from molding machine after mixing dust or fly ash collected in a hopper with a waste disposal material from an another hopper. Generally speaking, in the usual disposal method where a cement is used, 10 ∼30 weight parts of cement to 100 weight parts of waste is added and kneaded. When the disposal material by this invention is used, a more excellent stabilizing ability to hazardous metals is obtained compared with that of the case where the same amount of cement is used. Therefor, when a long term stabilizing ability to heavy metals equivalent to cement is wanted, an amount of a disposal material becomes less than that of cement and it can be expected that the volume of solid can be reduced . Further, when a long term stabilizing ability to heavy metals is insufficient with use of cement, a more strong stabilizing ability to heavy metals can be expected by adding the same amount of disposal material as cement. Further, when a chelate agent is used in an usual method, carbon disulfide may generate as seen from its synthetic method , or there are some cases where amines generate when some kind of disposal materials are used. Therefor, in some firms, a special ventilation is desired near a mixing equipment. While, since phosphate salt, which is a raw material of this invention, does not generate any odd smell, a handling in this invention is easy compared to the case of a chelate agent. As mentioned above, in a firm where a cement is used as a disposal material, a disposal material by this invention can be used easily only by pouring a disposal material into a silo, and further, this invention has an advantage that there is no need to take into consideration of a problem of an odd smell which is a serious problem in the case of a chelate agent.

Next, it is preferable that an amount of phosphate salts between 1 weight parts ∼30 weight parts is mixed with 100 weight of a waste. However, since an amount of a disposal material and phosphate salts used in waste disposal can be reduced by combining phosphate salts with silica or aluminum silicate, a more preferable added amount of phosphate salts is between 1 weight part ∼15 weight parts to 100 weight parts of waste. However, it is no need to say that a more large amount of phosphate salt can be used ,if necessary.

A mechanism how a multivalent metal salt of phosphate can stabilize heavy metals is not necessarily clear. However, there is a possibility that a multivalent metal salt of phosphate forms a porous structure and this porous structure may contribute to a stabilization of heavy metals since a solubility of a multivalent metal salt of phosphate to water is low, or there is a possibility of exchanging reaction between multivalent metal in salts of phosphate and heavy metals, or there is a possibility that a free multivalent metal works as a adsorbing agent of carbon dioxide under the alkaline condition and accelerates a precipitating of heavy metals by carbonation of heavy metals.

### Best mode for Carrying Out the Invention

### Example 1

As disposal materials, magnesium secondary phosphate( produced by Oohira Chem. Ltd. Co.), magnesium tertiary phosphate( produced by Oohira Chem. Ltd. Co.), aluminum secondary phosphate( produced by Oohira Chem. Ltd. Co.), calcium primary phosphate ( Wako Pure Chem. Ltd. Co.), calcium secondary phosphate ( Wako Pure Chem. Ltd. Co.), calcium tertiary phosphate( produced by Oohira Chem. Ltd. Co.) and iron phosphate ( produced by SHIONOGI Pharmaceutical Ltd.) Co. were used. As disposal materials used as comparative examples, silica ( produced by SHIONOGI Pharmaceutical Ltd. Co.( a specific surface area 400m²/g) ), aluminum silicate( Wako Pure Chem. Ltd. Co.(a specific surface area 500m²/g) ), quick and strong cement ( produced by Chuo cement Ltd. Co.) and a liquid chelate agent, which is obtained by connecting a dithio carboxyl group to a main chain of polyethyleneimine, were used.

After 5g ( 10 weight parts) of above mentioned disposal material and 30g water were added to 50 g( 100 weight parts) of an alkaline fly ash which has been discharged from an incineration firm of municipal wastes and contains a large amount of lead ( an amount of leaching Pb without treatment was 100mg/L in Notification No. 13 of the Environment Agency ) and the mixture was kneaded, the kneaded mixture was cured for 7days and solidified. However, an amount of chelate agents added in comparative example 1 ∼4 was 3 weight parts (1.5g) which was an amount generally used in a waste firm. Afterwards, a leaching test of lead was done according to an availability method in order to investigate the effect of making lead harmless when the disposal material by this invention was used. The results of tests were shown in Table 1 described below. Leaching amounts of lead in Notification No. 13 of the Environment Agency also were shown in the same table.

**Table 1**

| | material of disposal agent | amount of disposal agent added to 100 parts by weight of waste (parts by weight) | availability method by NEN7341 (1992) | | | amount of leaching Pb by method of Notification No.13 (mg/L) |
|---|---|---|---|---|---|---|
| | | | content of Pb (mg/dryKg) | amount of leaching Pb (mg/L) | relative leaching (%) | |
| example 1-1 | Mg secondary Phosphate | 10 | 2100 | <0.1 | <1 | 41 |
| example 1-2 | Mg tertially phosphate | 10 | 2500 | 0.1 | <1 | <0.1 |
| example 1-3 | Al secondary Phosphate | 10 | 1600 | 0.1 | <1 | <0.1 |
| example 1-5 | Ca primary phosphate | 10 | 2000 | <0.1 | <1 | 6.5 |
| example 1-6 | Ca secondary Phosphate | 10 | 1900 | <0.1 | <1 | 42 |
| example 1-7 | Ca tertially phosphate | 10 | 2200 | 0.1 | <1 | 41 |
| example 1-8 | iron phosphate | 10 | 2500 | 0.1 | <1 | 0.1 |
| comparative example 1-1 | silica | 10 | 2100 | 4.6 | 26 | <0.1 |
| comparative example 1-2 | aluminum silicate | 10 | 2200 | 6.9 | 37 | <0.1 |
| comparative example 1-3 | high-early-strength cement | 10 | 1900 | 8.3 | 51 | 10 |
| comparative example 1-4 | chelate agent | 3 | 2700 | 4.9 | 21 | 0.3 |

As seen from the results shown in Table 1, it is impossible to make a leaching Pd below the regulated value of Japan, 0.3 mg/L when a quick and strong cement was used as done in comparative example. When a chelate agent was used, a small amount addition of it make it possible to attain the regulated value of leaching Pb. However, though a chelate agent is superior to a quick and strong cement in availability test, a relative possible leaching amount is over 20%. Further, though silica or aluminum silicate of a large specific area is superior to cement in a relative leaching amount, it is seen that there is still a room for improvement. While, in the cases of a disposal material by this invention, it is seen that an amount of leaching Pb in then availability test is less than that of silica, aluminum silicate, quick and strong cement and a chelate agent given in comparative examples, when 10 weight parts of magnesium secondary phosphate, magnesium tertiary phosphate, aluminum secondary phosphate, calcium primary phosphate, calcium secondary phosphate, calcium tertiary phosphate and iron phosphate were used. Among these, magnesium tertiary phosphate, aluminum secondary phosphate and iron phosphate are especially preferable , since a leaching of Pb was below the regulation value even in Notification No. 13 of the Environment Agency.

### Example 2

As disposal materials, magnesium secondary phosphate( produced by Wako Pure Chem. Ltd. Co.), magnesium tertiary phosphate( produced by Wako Pure Chem. Ltd. Co.), calcium primary phosphate (Wako Pure Chem. Ltd. Co.), calcium secondary phosphate ( Wako Pure Chem. Ltd. Co.), calcium tertiary phosphate( produced by Wako Pure Chem. Ltd. Co.) and iron phosphate ( produced by Wako Pure Chem. Ltd. Co.) were used. As disposal materials used as comparative examples, normal cement (produced by Ube cement Ltd. Co.) was used. After 5g ( 10 weight parts) of above mentioned disposal material and 35g water were added to 50 g of a high alkaline fly ash which has been discharged from an incineration firm of municipal wastes and contains a large amount of lead ( an amount of leaching Pb without treatment was 35mg/L in Notification No. 13 of the Environment Agency) and the mixture was kneaded, the kneaded mixture was cured for 7days and solidified. Afterwards, a leaching test of lead was done according to Notification No.13 of the Environment Agency in order to investigate the effect of making lead harmless when the disposal material by this invention was used. The results of these tests were shown in Table 2. Here , the PH value in Table 2 is the that of extract of the treated waste obtained from the before mentioned leaching test.

**Table 2**

| | material of disposal agent | amount of disposal agent added to 100 parts by weight of waste (parts by weight) | Notification No.13 | |
|---|---|---|---|---|
| | | | amount of leaching Pb (mg/L) | PH (-) |
| example2-1 | Mg secondary. Phosphate | 10 | 4.4 | 12.25 |
| example2-2 | Mg tertially. Phosphate | 10 | 1.5 | 12.23 |
| example2-4 | Ca primary. Phosphate | 10 | 2.1 | 12.19 |
| example2-5 | Ca secondary phosphate | 10 | 4.6 | 12.24 |
| example2-6 | Ca tertially Phosphate | 10 | 4.7 | 12.25 |
| example2-7 | iron phosphate | 10 | 1.5 | 12.61 |
| comparative example2-1 | normal cement | 10 | 2.1 | 12.28 |

From results shown in table 2, it is seen that a leaching amount of Pb in the test of Notification No.13 of the Environment Agency were less than that of 10 weight parts addition of a normal cement given in comparative example when a waste was a high alkaline fly ash and magnesium tertiary phosphate and iron phosphate were used as disposal materials. Therefore, as in the case of an example 1, magnesium tertiary phosphate and iron phosphate are superior for a high alkaline fly ash. However, though a leaching amount of Pb was low in the case of no treatment as compared with example 1, a leaching amount of Pb after treatment was large and it did not attain the value below the regulated value 0.3 mg/L in Notification No.13 of the Environment Agency and a satisfactory treatment was difficult. The reason why it was difficult might be that an alkaline components in the fly ash made it easy for Pb to leach out and made it difficult to stabilize Pb since there were a large amount of alkaline components soluble in water such as calcium hydroxide (which made a fly ash alkaline ) . The results obtained above shows that an amount of a disposal material must be adjusted depending on the nature of a fly ash in order to attain the regulated value.

### Example 3

Waste disposal materials by this invention were prepared by mixing magnesium tertiary phosphate( produced by Oohira Chem. Ltd. Co.) with quick and strong cement in the ratio described in the below given table 3. A disposal material used in a comparative example was quick and strong cement. After 6g ( 20 weight parts ) of above mentioned disposal material and 18g water were added to 30 g(100 weight parts) of a high alkaline fly ash which has been discharged from an incineration firm of municipal wastes and contains a large amount of lead ( an amount of leaching Pb without treatment was 30mg/L in Notification No. 13 of the Environment Agency) and the mixture was kneaded, the kneaded mixture was cured for 7days and solidified. Afterwards, a leaching test of lead was done according to Notification No. 13 of the Environment Agency in order to investigate the effect of making lead harmless when the disposal material by this invention was used. The results of these tests were shown in Table 3. Here , the PH value in Table 3 is the that of extract of the treated waste obtained from the before mentioned leaching test.

**Table 3**

| Results of leaching Tests | | | | |
|---|---|---|---|---|
| | composition of disposal agent (weight parts) | | Notification No.13 | |
| | Mg tertiary phosphate | high-early-strength cement | amount of leaching Pb (mg/L) | PH (-) |
| comparative example3 | 0 | 100 | 1 | 12.42 |
| example3-1 | 25 | 75 | 0.4 | 12.39 |
| example3-2 | 50 | 50 | 0.4 | 12.41 |
| example3-3 | 75 | 25 | 0.3 | 12.38 |
| example3-4 | 100 | 0 | 0.4 | 12.35 |

From results shown in table 3, it is seen that a leaching amount of Pb was less as compared with that of a only use of quick and strong cement given in comparative example, when magnesium tertiary phosphate was added. Therefore, it was seen that a disposal material which was prepared by adding 33 ∼300 weight of magnesium tertiary phosphate to 100 weight of quick and strong cement was superior to an individual use of quick and strong cement if the same amount of disposal materials were added to a waste in both cases.

### Example 4

Waste disposal materials by this invention were prepared by mixing iron phosphate( produced by Wako Pure Chem. Ltd. Co.) with quick and strong cement in the ratio described in the below given table 4. A disposal material used in a comparative example was quick and strong cement (produce by Chuo cement Ltd. Co.). After 6g ( 20 weight parts ) of above mentioned disposal material and 18g water were added to 30 g (100 weight parts )of a high alkaline fly ash which has been discharged from an incineration firm of municipal wastes and contains a large amount of lead ( an amount of leaching Pb without treatment was 81mg/L in Notification No. 13 of the Environment Agency) and the mixture was kneaded, the kneaded mixture was cured for 7days and solidified. Afterwards, a leaching test of lead was done according to Notification No. 13 of the Environment Agency in order to investigate the effect of making lead harmless when the disposal material by this invention was used. The results of these tests were shown in Table 4. Here , the PH value in Table 4 is the that of extract of the treated waste obtained from the before mentioned leaching test.

**Table 4**

| Results of Leaching Tests | | | | |
|---|---|---|---|---|
| | composition of disposal agent (weight parts) | | Notification No.13 | |
| | Mg tertiary phosphate | high-early-strength cement | amount of leaching Pb (mg/L) | PH (-) |
| comparative example4 | 0 | 100 | 2.7 | 12.42 |
| example4-1 | 25 | 75 | 1.7 | 12.40 |
| example4-2 | 50 | 50 | 1.3 | 12.37 |
| example4-3 | 75 | 25 | 1.6 | 12.37 |
| example4-4 | 100 | 0 | 2.1 | 12.39 |

From results shown in table 4, it is seen that a leaching amount of Pb was less as compared with that of a only use of quick and strong cement given in comparative example when iron phosphate was added. Therefore, it was seen that a disposal material which was prepared by adding 33 ∼ 300 weight of magnesium tertiary phosphate to 100 weight of quick and strong cement was superior to an individual use of quick and strong cement if the same amount of disposal materials were added to a waste in both cases.

### Example 5

A waste disposal material by this invention was prepared by mixing 50 weight parts of magnesium tertiary phosphate (produced by Oohira Chem. Ltd. Co.) with 50 weight parts of porous silica (specific surface area was 250 m²/g) which was obtained through heat treating acidic white clay with sulfuric acid and was washed sufficiently. As a comparative example, a disposal material of an individual porous silica mentioned above was also prepared. After 6g ( 20 weight parts) of above mentioned disposal material and 18g water were added to 30 g of a high alkaline fly ash which has been discharged from an incineration firm of municipal wastes and contains a large amount of lead ( an amount of leaching Pb without treatment was 94mg/L, PH 12.45 in Notification No.13 of the Environment Agency) and the mixture was kneaded, the kneaded mixture was cured for one day and solidified. Afterwards, a leaching test of lead was done according to Notification No. 13 of the Environment Agency in order to investigate the effect of making lead harmless when the disposal material by this invention was used. The results of these tests were shown in Table 5. Here , the PM value in Table 5 is the that of extract of the treated waste obtained from the before mentioned leaching test.

**Table 5**

| Results of leaching Tests | | | | |
|---|---|---|---|---|
| | composition of disposal agent (weight parts) | | Notification No.13 | |
| | Mg tertiary phosphate | porous silica | amount of leaching Pb(mg/L) | PH (-) |
| example5 | 50 | 50 | 0.27 | 12.19 |
| comparative example5-1 | 0 | 100 | 0.62 | 12.41 |
| comparative example5-2 | no treatment | | 94 | 12.45 |

From results shown in table 4, it is seen that a disposal material by this invention which uses magnesium tertiary phosphate in a combination with a porous silica is superior to an individual use of a porous silica in stabilizing ability of heavy metals.

### Example 6

The waste disposal materials 6-1∼3 by this invention were prepared by mixing magnesium tertiary phosphate ( produced by Oohira Chem. Ltd. Co.) with the same porous silica as used in example 5 in the ratios described in the table given below. As a comparative example, a disposal material of an individual use of porous silica mentioned above( comparative treatment agent 6) was also prepared.

**Table 6-1**

| Compositions of disposal agent | | |
|---|---|---|
| name of disposal agent | magnesium tertiary phosphate (weight parts) | porous silica (weight parts) |
| disposal agent 6-1 | 17 | 83 |
| disposal agent 6-2 | 33 | 67 |
| disposal agent 6-3 | 50 | 50 |
| comparative agent 6 | 0 | 100 |

After the amount described in table 6-2 given below of above mentioned disposal material and 18g water were added to 30 g of a fly ash which has been discharged from an incineration firm of municipal wastes and contains a large amount of lead (an amount of leaching Pb without treatment was 94mg/L, PH 12.45 in Notification No. 13 of the Environment Agency) and the mixture was kneaded, the kneaded mixture was cured for one day and solidified. Afterwards, a leaching test of lead was done according to Notification No.13 of the Environment Agency in order to investigate the effect of making lead harmless when the disposal material by this invention was used. The results of these tests were shown in Table 6-2. As comparative examples, the results in the cases where 3.6 g ( 12 weight parts), 4.5 g (15 weight parts ) and 6g (20 weight parts) of comparative agent were used were also given in the table 6-2. Further, a leaching amount of Pb from the fly ash used in this test without any treatment also was given. Here , the PH value in Table 6-2 is the that of extract of the treated waste obtained from the before mentioned leaching test.

**Table 6-2**

| the results of leaching tests | | | | |
|---|---|---|---|---|
| | disposal agent | amount of disposal agent added to 100 weight parts of waste (parts by weight) | Notification No.13 | |
| | | | an amount of leaching Pb (mg/L) | PH (-) |
| example6-1 | disposal agent 6-1 | 12 | 0.74 | 12.09 |
| example6-2 | disposal agent 6-2 | 15 | 0.57 | 12.09 |
| example6-3 | disposal agent 6-3 | 20 | 0.24 | 12.10 |
| comparative example6-1 | comparative disposing agent6 | 12 | 1.5 | 12.25 |
| comparative example6-2 | comparative disposing agent6 | 15 | 0.93 | 12.24 |
| comparative example6-3 | comparative disposing agent6 | 20 | 0.45 | 12.22 |
| comparative example6-4 | no treatment | - | 94 | 12.45 |

When the results of examples and comparative examples given in table 6-2 were compared each other under the same added amount of the disposal materials, it was seen that all disposal material by this invention, where magnesium tertiary phosphate was used in a combination with a porous silica, were superior to an individual use of porous silica in the stabilizing ability of heavy metals. Further, when the mixing ratios of magnesium tertiary phosphate in the treatment agents ,6-1∼3 , were taken into an account , it was seen that even the disposal material which was made by adding 20 weight parts of magnesium tertiary phosphate to 100 weight parts of silica was superior to an individual use of silica. Further, even the disposal material which was made by adding 100 weight parts of magnesium tertiary phosphate to 100 weight parts of silica was still superior to an individual use of silica.

### Example 7

The waste disposal material 7 by this invention was prepared by mixing 40 weight parts of magnesium tertiary phosphate ( produced by Oohira Chem. Ltd. Co.) with 60 weight parts of the same porous silica as used in example 5. As a comparative example, a disposal material of an individual use of a quick and strong cement described before ( comparative disposal material 7 ) was also prepared.

After 0.9g ( 3 weight parts) of above mentioned disposal material and 18g water were added to 30 g of a fly ash which has been discharged from an incineration firm of municipal wastes and contains a large amount of lead ( an amount of leaching Pb without treatment was 36mg/L, PH 12.08 in Notification No.13 of the Environment Agency) and the mixture was kneaded, the kneaded mixture was cured for one day and solidified. Afterwards, a leaching test was done with use of an acidic extractant with referring to TCLP method of USA as a method for estimating a stability in the case where wastes treated by these disposal materials are left for a long term. In this estimating method, after drying wastes treated by disposal materials, they were passed through the sieves with 5.0mm opening. 500ml of an aqueous acetic acid solution, PH of which was adjusted to 4.9 ±0.05, was added to10g of this passed waste and the mixture was shaken for 20 hours with a use of a horizontal shaker. After shaking, liquid and solid were separated with an use of 0.45 µm ultra filter. After 0.5ml of concentrate nitric acid was added to 20 ml of extract, a leaching amount of Pb was measured by an atomic spectroscopy. The result were shown in Table 7 given below. An amount of leaching Pb by Notification No. 13 of the Environment Agency was also given in table 7.

**Table 7**

| Results of Leaching Tests with an use of acidic Extractant | | | | | |
|---|---|---|---|---|---|
| | disposal agent | leaching test with use of acidic extractant | | leaching test by Notification No.13 | |
| | | amount of leaching Pb (mg/L) | PH (-) | amount of leaching Pb (mg/L) | PH (-) |
| example 7 | disposal agent 7 | 0.13 | 7.41 | 0.95 | 11.53 |
| comparative example7-1 | comparative disposal agent 7 | 0.87 | 7.18 | 12 | 11.93 |
| comparative example7-2 | no treatment | 0.44 | 7.64 | 36 | 12.08 |

From results shown in table 7, it is seen that a disposal material by this invention which uses magnesium tertiary phosphate in a combination with a porous silica is superior to an individual use of a quick and strong cement in stabilizing ability of heavy metals even under the condition of an acidic exractant.

### Example 8

The waste disposal material 8 by this invention was prepared by mixing 50 weight parts of magnesium tertiary phosphate ( produced by Oohira Chem. Ltd. Co.) with 50 weight parts of the synthetic aluminum silicate( produced by KYOWA Chem. Ltd. Co. Kyoward 700PEL, specific area 500m²/g).

After 4.5g ( 15 weight parts) of above mentioned disposal material and 18g water were added to 30 g of a fly ash which has been discharged from an incineration firm of municipal wastes and contains a large amount of lead ( an amount of leaching Pb without treatment was 94mg/L, PH 12.45 in Notification No. 13 of the Environment Agency) and the mixture was kneaded, the kneaded mixture was cured for one day and solidified. Afterwards, a leaching test of lead was done according to Notification No.13 of the Environment Agency in order to investigate the effect of making lead harmless when the treatment agent by this invention was used. The results of these tests were shown in Table 8. As comparative examples, the leaching amounts of Pb in the case where 4.5 g ( 15weight parts) of porous aluminum silicate was used and the nearly same waste treatment was done were also given in the table 8.

**Table 8**

| Results of Leaching Tests | | | |
|---|---|---|---|
| | disposal agent | Notification No.13 | |
| | | amount of leaching Pb (mg/L) | PH (-) |
| example 8 | disposal agent 8 | 0.55 | 12.10 |
| comparative example8-1 | comparative disposal agent 8 | 0.68 | 12.19 |
| comparative example8-2 | no treatment | 94 | 12.45 |

From results shown in table 8, it is seen that a disposal material by this invention which uses magnesium tertiary phosphate in a combination with a porous aluminum silicate is superior to an individual use of a porous aluminum silicate in stabilizing ability of heavy metals.

### Example 9

The waste disposal material 9 by this invention was prepared by mixing 20 weight parts of magnesium tertiary phosphate (produced by Oohira Chem. Ltd. Co.) with 100 weight parts of the same porous silica (specific surface area 250m²/g) as used in example 5 described before. As a comparative example, a disposal material of an individual use of porous silica mentioned above( comparative treatment agent 9) was also prepared. The compositions of this disposal material, agent 9, and comparative agent 9 were given in table 9-1.

**Table 9**

| The Composition of Disposal Agent | | |
|---|---|---|
| | silica (weight parts) | magnesium tertiary phosphate ( weight parts) |
| disposal agent 9 | 100 | 20 |
| comparative disposal agent 9 | 100 | 0 |

After 6g ( 12 weight parts) of above mentioned disposal material 9 or 5 g ( 10 weight parts) of above mentioned comparative disposal material 9 and 30g water were added to 50 g of an alkaline fly ash which has been discharged from an incineration firm of municipal wastes and contains a large amount of lead ( an amount of leaching Pb without treatment was 110mg/L in Notification No.13 of the Environment Agency) and the mixture was kneaded, the kneaded mixture was cured for 7 days and solidified. Afterwards, a leaching test of lead was done according to the availability method in order to investigate the effect of making lead harmless when the disposal material by this invention was used. The results of these tests were shown in Table 9-2 given below.

**Table 9-2**

| | disposal agent | amount of disposal agent added to 100 weight parts of wast (weight parts) | availability method by NEN7341 (1992) | | | amount of leaching Pb by Notification No.13 (mg/L) |
|---|---|---|---|---|---|---|
| | | | content of Pb (mg/dryKg) | leaching amount of Pb (mg/L) | relative availability (%) | |
| example 9 | disposal agent 9 | 12 | 1900 | 1.3 | 8 | <0.1 |
| comparative example 9 | comparative disposal agent 9 | 10 | 2200 | 4.1 | 22 | <0.1 |

### Example 10

The waste disposal materials 10 by this invention was prepared by an individual use of magnesium tertiary phosphate (produced by Oohira Chem. Ltd. Co.). The wastes to be treated were shown in table 10-1 given below. A various kind of fly ashes, 10-1∼7, which were discharged from an incineration firm of municipal wastes and contains a large amount of lead were prepared.

**Table 10-1**

| Fly Ashes to be treated | | | |
|---|---|---|---|
| | content of Pb (mg/kg) | Notification No.13 | |
| | | amount of leaching Pb from waste with no treatment (mg/L) | PH of extract (-) |
| fly ash10-1 | 1700 | 7.7 | 12.2 |
| fly ash10-2 | 1000 | 2.9 | 12.24 |
| fly ash10-3 | 1400 | 30 | 12.21 |
| fly ash10-4 | 5300 | 93 | 12.05 |
| fly ash10-5 | 6530 | 240 | 12.07 |
| fly ash10-6 | 9200 | 400 | 12.53 |
| fly ash10-7 | 6200 | 410 | 12.1 |

After 0.75g (2.5 weight parts), 1.5g(5 weight parts), 3g( 10 weight parts), 6g( 20 weight parts) and 9g (30 weight parts) of above mentioned disposal material 10 and 18g water were added to 30 g of a various kinds of fly ashes given in table 10-1 and the mixture was kneaded, the kneaded mixture was cured for 7 days and solidified. Afterwards, a leaching test of lead was done according to Notification No.13 of the Environment Agency in order to investigate the effect of making lead harmless when the disposal material by this invention was used. The results of these tests were shown in Table 10-2 given below.

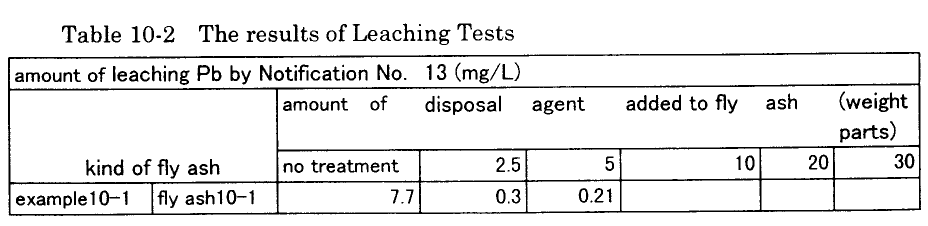

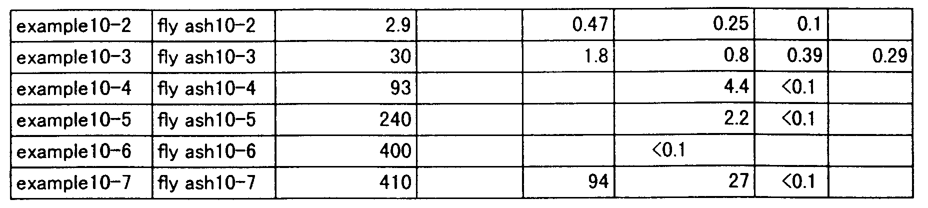

From the results shown in table 10-2, it is seen that it is possible to make an amount of Pb leaching below the regulated value, 0.3mg/L, in Notification No.13 of the Environment Agency by an individual use of 2 weight parts ∼ 30 weight parts of magnesium tertiary phosphate , though an amount to be added depends on an alkaline nature and a content of Pb.

### Example 11

Waste disposal materials 11-1 ∼ 3 by this invention were prepared by adding 60 weight parts of silica (specific surface area 250m²/g, the same as used in example 5) and 10 weight parts of either aluminum secondary phosphate ( produced by Oohira Chem. Ltd. Co.) or magnesium tertiary phosphate ( produced by Oohira Chem. Ltd. Co.) to 30 weight parts of portland cement (produced by Ube cement Ltd. Co.) . The mixing ratios of these disposal materials are shown in Table 11-1.

**Table 11-1**

| | mixing ratio (weight part) | | | kind of phosphate salt |
|---|---|---|---|---|
| | usual portland cement | silica | phosphate salt | |
| disposal agent 11-1 | 30 | 60 | 10 | Ca secondary phosphate |
| disposalagent 11-2 | 30 | 60 | 10 | Mg tertially phosphate |
| material 11-3 | 30 | 60 | 10 | iron phosphate |
| comparative material 11 | 40 | 60 | 0 | - |

After 7.5 ( 15 weight parts) of above mentioned disposal material and 30g water were added to 50 g of a high alkaline fly ash which has been discharged from an incineration firm of municipal wastes and contains a large amount of lead ( an amount of leaching Pb without treatment was 110mg/L in Notification No.13 of the Environment Agency) and the mixture was kneaded, the kneaded mixture was cured for 7 days and solidified. Afterwards, a leaching test of lead was done according to the availability method in order to investigate the effect of making lead harmless when the disposal material by this invention was used. The results of these tests were shown in Table 11-2 given below. Amount of Pb leaching in Notification No. 13 of the Environment Agency are also shown in that table.

**Table 11-2**

| | disposal agent | availability method by NEN7341 (1992) | | | amount of leaching Pb by Notification No.13 (mg/L) |
|---|---|---|---|---|---|
| | | content of Pb (mg/dryKg) | leaching amount of Pb(mg/L) | relative availability (%) | |
| example11-1 | disposal agent 11-1 | 2100 | 0.52 | 3 | 0.4 |
| example11-2 | disposal agent 11-2 | 2200 | 1.9 | 11 | <0.1 |
| example11-3 | disposal agent 11-3 | 2100 | 2.5 | 14 | 0.24 |
| comparative example 11 | comparative disposal agent 11 | 1900 | 4.8 | 30 | 0.37 |

### Example 12

Waste disposal materials 12-1 ∼4 by this invention were prepared by adding 10 weight parts of iron powder, 40 weight parts of silica ( produced by SHIONOGI Pharmaceutical Ltd. Co. specific surface area 400²/mg ) and 10 weight parts of either aluminum secondary phosphate ( produced by Oohira Chem. Ltd. Co.) or magnesium tertiary phosphate ( produced by Oohira Chem. Ltd. Co.) to 40 weight parts of portland cement ( produced by Ube cement Ltd. Co.) . The disposal material 12 used as a comparative example was prepared by adding 10 weight parts of iron powder, and 40 weight parts of silica ( produced by SHIONOGI Pharmaceutical Ltd. Co. ) to 50 weight parts of portland cement ( produced by Ube cement Ltd. Co.) . The mixing ratios of these disposal materials are shown in Table 12-1.

**Table 12-1**

| The composition of Disposal Materials | | | | | |
|---|---|---|---|---|---|
| | mixing ratios (weight parts) | | | | kind of phosphate salt |
| | usual portland cement | iron powder | silica | phosphate salt | |
| material 12-1 | 40 | 10 | 40 | 10 | Al secondary phosphate |
| material 12-2 | 40 | 10 | 40 | 10 | Ca primary phosphate |
| material 12-3 | 40 | 10 | 40 | 10 | Ca secondary phosphate |
| material 12-4 | 40 | 10 | 40 | 10 | Ca tertially phosphate |
| comparative material 12 | 50 | 10 | 40 | - | no |

After 7.5 ( 15 weight parts) of above mentioned disposal material and 30g water were added to 50 g of a fly ash which has been discharged from an incineration firm of municipal wastes and contains a large amount of lead ( an amount of leaching Pb without treatment was 110mg/L in Notification No.13 of the Environment Agency) and the mixture was kneaded, the kneaded mixture was cured for 7 days and solidified. Afterwards, a leaching test of lead was done according to the availability method in order to investigate the effect of making lead harmless when the disposal material by this invention was used. The results of these tests were shown in Table 12-2 given below. Amount of Pb leaching in Notification No.13 of the Environment Agency are also shown in that table.

**Table 12-2**

| | added amount of phosphate salt (weight part) | availability method by NEN7341 (1992) | | | amount of leaching Pb by Notification No. 13 (mg/L) |
|---|---|---|---|---|---|
| | | content of Pb (mg/dryKg) | amount of leaching Pb (mg/L) | relative availability (%) | |
| example12-1 | 1.5 | 1900 | 2.9 | 18 | <0.1 |
| example12-2 | 1.5 | 2000 | 3.5 | 20 | 0.3 |
| example12-3 | 1.5 | 2400 | 1.9 | 9 | 0.4 |
| example12-4 | 1.5 | 2400 | 2.7 | 13 | 0.4 |
| comparative example12 | 0 | 2100 | 6.8 | 38 | 0.34 |

From results of leaching tests, it is seen that an addition of 15 weight parts of disposal material by this invention, which contains aluminum phosphate or calcium phosphate, to 100 weight parts of waste makes a relative possible leaching amount reduce below 60% compared with comparative example. Further, an individual use of either calcium primary phosphate, calcium secondary phosphate or calcium tertiary phosphate can not satisfy a stabilizing ability of lead in Notification No. 13 of the Environment Agency, while a combination of these compounds with silica can attain the tightened regulated value in Japan. As mentioned above, disposal materials which have superior abilities both in the availability test and in Notification No.13 of the Environment Agency can be obtained by combining silica with aluminum phosphate or calcium phosphate.

### Exploitation in Industry

Disposal materials by this invention are quite effective in stabilizing treatment of fly ashes such as EP ash or bag ash, since heavy metals are effectively stabilized and leaching amounts of heavy metals are reduced when EP ash or bag ash, which is discharged from an incineration firm of industrial or municipal wastes and contains a large amount of hazardous heavy metals, especially dust such as EP ash or bag ash in which calcium hydrate or calcium oxide is blown, are treated by an use of disposal materials by this invention. Further, the disposal materials by this invention can be applied to the disposal of slag discharged from mines, to stabilization of heavy metals contained in the soil contaminated therewith, and to disposal of the sludge containing heavy metals resulting from waste water treatment.

## Claims

1. A waste disposal agent comprising at least one selected from a phosphate salt of multivalent metal as a component.

2. A waste disposal agent as claimed in Claim 1 wherein the phosphate salt is sparing soluble in water.

3. A waste disposal agent as claimed in Claim 1 wherein the phosphate salt of multivalent metal is at least one selected from the group consisting of a magnesium phosphate salt, an aluminum phosphate salt, a calcium phosphate salt and an iron phosphate salt.

4. A waste disposal agent as claimed in Claim 3 wherein the magnesium salt is at least one selected from the group consisting of magnesium secondary phosphate and magnesium tertiary phosphate.

5. A waste disposal agent as claimed in Claim 3 wherein the aluminum phosphate salt is aluminum secondary phosphate.

6. A waste disposal agent claimed in Claim 3 wherein the calcium phosphate salt is at least one selected from the group consisting of calcium primary phosphate, calcium secondary phosphate and calcium tertiary phosphate.

7. A waste disposal agent as claimed in Claim 3 wherein the iron phosphate salt is iron phosphate.

8. A waste disposal agent as claimed in any of Claims 1 to 7 wherein the waste disposal agent includes a phosphate salt of multivalent metal of 10 to 100 % by weight.

9. A waste disposal agent as claimed in Claim 1 wherein the waste disposal agent includes at least one selected from the group consisting of cement, silica and aluminum silicate.

10. A waste disposal agent as claimed in Claim 9 wherein the cement is water setting or air setting cement .

11. A waste disposal agent as claimed in Claim 9 wherein 10 ∼400 weight parts of a phosphate salt is added to 100 weight parts of cement; said phosphate salt being at least one selected from the group consisting of magnesium secondary phosphate, magnesium tertiary phosphate, aluminum secondary phosphate, calcium primary phosphate, calcium secondary phosphate, calcium tertiary phosphate and iron phosphate.

12. A waste disposal agent as claimed in Claim 9 wherein 10 ∼40 weight parts of a phosphate salt is added to 100 weight parts of cement; said phosphate salt being at least one selected from the group consisting of magnesium tertiary phosphate, aluminum secondary phosphate, and iron phosphate.

13. A waste disposal agent as claimed in Claim 9 wherein 10 ∼40 weight parts of a calcium phosphate salt is added to 100 weight parts of cement; said calcium phosphate salt being at least one selected from the group consisting of calcium primary phosphate, calcium secondary phosphate and calcium tertiary phosphate.

14. A waste disposal agent as claimed in Claim 9 wherein the silica or the aluminum silicate has a specific surface area of 150 m²/g or more, and less than 1000m²/g in BET method.

15. A waste disposal agent as claimed in Claim 9 wherein the silica or the aluminum silicate has a specific surface area of 200 m²/g or more, and less than 700m²/g in BET method.

16. A waste disposal agent as claimed in Claim 9 wherein 10∼100 weight parts of a phosphate salt is added to 100 weight parts of at least one of silica or aluminum silicate; said phosphate salt being selected from at least one selected from the group consisting of magnesium secondary phosphate, magnesium tertiary phosphate, aluminum secondary phosphate, calcium primary phosphate, calcium secondary phosphate, calcium tertiary phosphate and iron phosphate.

17. A waste disposal agent as claimed in Claim 9 wherein 10∼20 weight parts of a hydrochloride is added to 100 weight parts of at least one of silica or aluminum silicate; said hydrochloride being at least one selected from the group consisting of magnesium tertiary phosphate, aluminum secondary phosphate and iron phosphate .

18. A waste disposal agent as claimed in Claim 9 wherein 10∼20 weight parts of a calcium phosphate salt is added to 100 weight parts of at least one of silica or aluminum silicate; said calcium phosphate salt being at least one selected from the group consisting of calcium primary phosphate, calcium secondary phosphate and calcium tertiary phosphate.

19. A waste disposal agent as claimed in Claim 9 wherein (1) 10∼100 weight parts of a phosphate salt and (2) 30∼800 weight parts of cement are added to 100 weight parts of at least one of silica or aluminum silicate; said phosphate salt being at least one selected from the group consisting of magnesium secondary phosphate, magnesium tertiary phosphate, aluminum secondary phosphate, calcium primary phosphate, calcium secondary phosphate, calcium tertiary phosphate and iron phosphate .

20. A waste disposal agent as claimed in Claim 9 wherein (1) 10∼50 weight parts of a multivalent phosphate salt and (2) 30∼350 weight parts of cement are added to 100 weight parts of at least one of silica or aluminum silicate; said multivalent phosphate salt being at least one selected from the group consisting of magnesium tertiary phosphate, aluminum secondary phosphate and iron phosphate.

21. A waste disposal agent as claimed in Claim 9 wherein (1) 10∼50 weight parts of a calcium phosphate salt and (2) 30∼350 weight parts of cement are added to 100 weight parts of at least one of silica or aluminum silicate; said calcium phosphate salt being at least one selected from the group consisting of calcium primary phosphate, calcium secondary phosphate and calcium tertiary phosphate.

22. A waste disposal agent as claimed in Claim 1 wherein the iron powder is further added.

23. A waste disposal agent as claimed in Claim 9 wherein the iron powder is further added.

24. A waste disposal agent as claimed in Claim 23 wherein (1) 10∼100 weight parts of at least one multivalent phosphate salt selected from the group consisting of magnesium secondary phosphate, magnesium tertiary phosphate, aluminum secondary phosphate, calcium primary phosphate, calcium secondary phosphate, calcium tertiary phosphate and iron phosphate, (2) 10∼700 weight parts of cement, and (3) 10∼100 weight parts of an iron powder are added to 100 weight parts of at least silica or aluminum silicate.

25. A waste disposal agent as claimed in Claim 23 wherein (1) 10∼25 weight parts of a multivalent phosphate salt, (2) 30∼100 weight parts of cement and (3) 10∼25 weight parts of an iron powder are added to 100 weight parts of at least one of silica or aluminum silicate; said multivalent phosphate salt being at least one selected from the group consisting of magnesium tertiary phosphate, aluminum secondary phosphate and iron phosphate.

26. A waste disposal agent as claimed in Claim 23 wherein (1) 10∼25 weight parts of a calcium phosphate salt, (2) 30∼100 weight parts of cement, and (3) 10∼25 weight parts of an iron powder are added to 100 weight parts of at least silica or aluminum silicate; said calcium phosphate being at least one selected from the group consisting of calcium primary phosphate, calcium secondary phosphate and calcium tertiary phosphate.

27. A waste disposal method comprising the steps of: (1) mixing a waste with a waste disposal agent as claimed in Claims 1, 9 or 23; said waste containing at least one hazardous heavy metal selected from the group consisting of lead, cadmium, mercury, chromium, copper and nickel, (2) kneading the mixture if necessary by adding water, and (3) curing to solidify the mixture.

28. A method as claimed in Claim 27 wherein the waste is either a fly ash, slag, soil or a sludge.

29. A method as claimed in Claim 27 wherein the waste is a highly alkaline fly ash.

30. A method as claimed in Claim 27 wherein a waste disposal agent is added to the waste in the ratio that the multivalent phosphate salt being comprised in said agent corresponds to 1∼30 weight parts against 100 weight parts of the waste; said multivalent phosphate salt being selected from the group consisting of magnesium secondary phosphate, magnesium tertiary phosphate, aluminum secondary phosphate, calcium primary phosphate, calcium secondary phosphate, calcium tertiary phosphate and iron phosphate.
